(19) Europäisches Patentamt / European Patent Office / Office européen des brevets

(11) **EP 2 345 961 A1**

(12) **EUROPEAN PATENT APPLICATION**

(43) Date of publication:
**20.07.2011 Bulletin 2011/29**

(51) Int Cl.:
**G06F 9/45** (2006.01)

(21) Application number: **11001883.5**

(22) Date of filing: **14.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **23.09.2005 US 234484**

(62) Document number(s) of the earlier application(s) in accordance with Art. 76 EPC:
**06814800.6 / 1 927 048**

(71) Applicant: **Intel Corporation**
**Santa Clara, CA 95052 (US)**

(72) Inventors:
• **Liao, Shih-Wei**
**San Jose, CA 95134 (US)**
• **Du, Zhaohui**
**Shanghai, 201103 (CN)**
• **Wu, Gansha**
**Beijing, 100080 (CN)**
• **Lueh, Guei-Yuan**
**San Jose, CA 95120 (US)**
• **Ying, Zhiwei**
**Shanghai, 200336 (CN)**
• **Peng, Jinzhan**
**Beijing, 100080 (CN)**

(74) Representative: **Beresford, Keith Denis Lewis et al**
**Beresford & Co.**
**16 High Holborn**
**London**
**WC1V 6BX (GB)**

Remarks:
•Claims filed after the date of filing of the application (Rule 68(4) EPC).
•This application was filed on 07-03-2011 as a divisional application to the application mentioned under INID code 62.

(54) **Data transformations for streaming applications on multiprocessors**

(57) Method for optimizing stream operator processing by creating a system of inequalities to describe a multi-dimensional polyhedron, solving the system by projecting the polyhedron into a space of one fewer dimensions, and mapping the solution into the stream program. Other program optimization methods based on affine partitioning are also described and claimed.

Figure 3

**Description**

## FIELD OF THE INVENTION

The invention relates to techniques for optimizing computer programs. More specifically, the invention relates to techniques for exposing and exploiting parallelism in computer programs.

## BACKGROUND

Computer systems containing more than one central processing unit ("CPU") are becoming more common. Unfortunately, performance gains from increasing the number of CPUs in a system generally do not scale linearly with the number of CPUs. However, a growing class of applications - streaming media applications - often present processing patterns that can make more efficient use of multiple CPUs. Nevertheless, even streaming media applications performance usually does not scale completely linearly as the number of CPUs, and designing applications to take advantage of the parallel processing capabilities of multiple CPUs is a difficult task. Work to simplify parallel application design and to improve parallel application performance is proceeding on several fronts, including the design of new computer languages and the implementation of new optimization schemes.

Computer programs are generally expressed in a high-level language such as C, C++ or Fortran. The program is analyzed and converted to a sequence of machine instructions to execute on a particular type of CPU by a program known as a compiler. Compilers are responsible for producing instruction sequences that correctly implement the logical processes described by the high-level program. Compilers often include optimization functions to improve the performance of the instruction sequence by reordering operations to improve memory access characteristics or eliminate calculations whose results are never used. Some compilers can also detect logical program passages that have no mutual dependencies, and arrange for these passages to be executed in parallel on machines that have multiple CPUs. Computer languages like Brook and StreamIt have been designed specifically to help the compiler to identify opportunities for parallel processing.

Current compiler optimization strategies proceed on an ad hoc basis, performing a series of heuristic-driven transformations in a sequence of independent "passes" over an intermediate representation of the programs. For example, a "loop interchange" pass might alter a program to process data in an array in row-major, rather than column-major, order so that the CPU's cache can work more effectively, or a "dead code" pass might search for and remove instructions that can never be executed. These passes may be order-dependent: one type of optimization can hide or eliminate opportunities for another type of optimization, so changing the order of optimization passes can change the performance of the compiled program. Unfortunately, the large number of different optimizations makes it impractical to compile a program with different optimization pass orders to see which order provides the best optimization of a given program.

## BRIEF DESCRIPTION OF DRAWINGS

Embodiments of the invention are illustrated by way of example and not by way of limitation in the figures of the accompanying drawings in which like references indicate similar elements. It should be noted that references to "an" or "one" embodiment in this disclosure are not necessarily to the same embodiment, and such references mean "at least one."

Figure shows features of a two-dimensional data array and its mapping to computer memory.

Figure 2 shows data access patterns of a program fragment to operate on two, two-dimensional arrays.

Figure 3 is a flow chart of compiler optimization operations according to an embodiment of the invention.

Figure 4 shows another way to visualize the operations of a program optimized by an embodiment of the invention.

Figure 5 is a flow chart of compiler optimizations on a streaming program.

Figure 6 shows a computer system to host an embodiment of the invention and to execute optimized programs produced by an embodiment.

## DETAILED DESCRIPTION

Embodiments of the invention can improve locality of reference and detect opportunities for parallel execution in computer programs, and rearrange the programs to decrease memory footprints and increase intra-thread dependencies. Analytical models to achieve these beneficial results are described by reference to examples that will often include simple and/or inefficient operations (such as calculating a running sum) because the operations performed on data after it has been retrieved is irrelevant. Embodiments of the invention can improve the memory access patterns and concurrency of programs that perform arbitrarily complex calculations on data, but examples with complex calculations would merely obscure the features that are sought to be described.

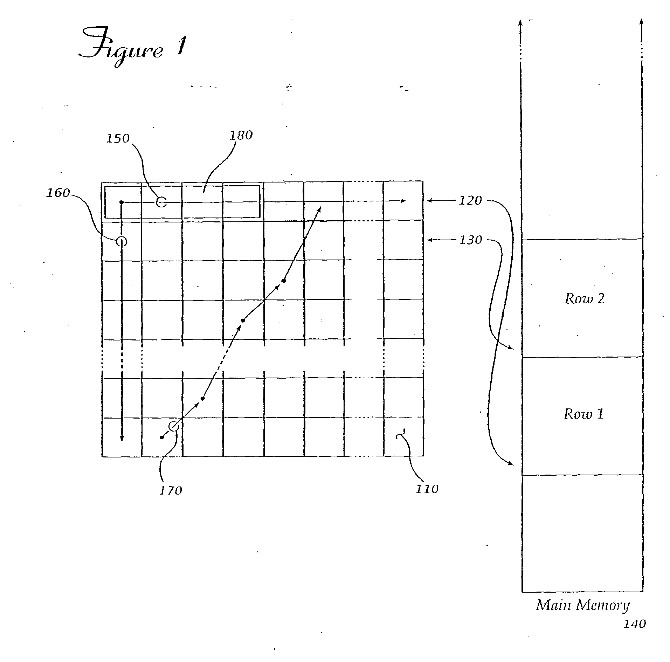

Figure 1 shows a two-dimensional array of data 110, and illustrates how the contents of each row 120, 130 might be mapped into the one-dimensional array of memory locations of main memory 140 by a computer language that arranged multi-dimensional arrays in row-major order. (Some languages store multi-dimensional arrays in column-major order, but the analysis of data processing operations is easily adapted. Row-major storage will be assumed henceforth, unless otherwise specified.)

A program to process the data in array 110 might examine or operate on the elements left-to-right by rows 150, top-to-bottom by columns 160, or in some more complicated diagonal pattern 170. Because modern CPUs usually load data from memory into internal caches in contiguous multi-word blocks (*e.g.* 180) (a process known as "cache-line filling"), processing patterns that can operate on all the data loaded in one cache line before requiring the CPU to load a new cache line can execute significantly faster than patterns that operate on only one item in the cache line before requiring data from an un-cached location.

Thus, for example, a program to sum the data in rows of array 110 could complete a row with about $c/l$ cache line fills ($c$ is the number of columns in the array and $l$ is the number of words in a cache line). By contrast, a program to sum the data in columns of array 110 would require $r$ cache line fills to complete a column ($r$ is the number of rows in the array) - the program would receive little or no benefit from the CPU's caching capabilities. Furthermore, after the first column was completed, the CPU would have to load the data from *array[0][0]* through *array[0][l-1]* into a cache line again to begin processing the second column (assuming that the number of rows in the array exceeded the number of available cache lines, so that the previously-loaded data had been evicted).

From another perspective, the efficient use of data loaded in a cache-line fill reduces the amount of cache memory required to hold the data during processing. The cache utilization can be thought of as a "memory footprint" of a code sequence. Since cache memory is a scarce resource, reducing memory footprints can provide significant performance benefits.

It is easy to see that the left-to-right, row-by-row access pattern 150 for summing array rows leaves little or no room for improvement, and that the top-to-bottom, column-by-column access pattern 160 for summing array columns can be improved by summing groups of $l$ columns simultaneously. The latter is an optimization that can be performed adequately by prior-art loop-interchange heuristics. However, with more complex patterns such as diagonal 170, heuristics have less success.

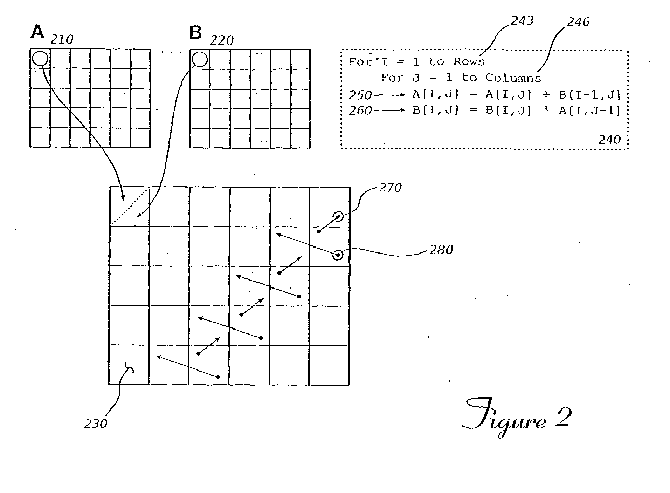

Figure 2 introduces a two-array optimization problem to show an aspect of embodiments of the invention. Elements of array A 210 and B 220 are shown superimposed in combined array 230; the two arrays are to be operated on according to the pseudo-code program fragment 240. Loops 243 and 246 iterate over the arrays row-by-row and column-by-column, while statements S1 (250) and S2 (260) perform simple calculations on array elements (again, the actual calculations are unimportant; only the memory access patterns are relevant). Arrows 270 and 280 show how statements S1 and S2 access array elements from different rows and columns.

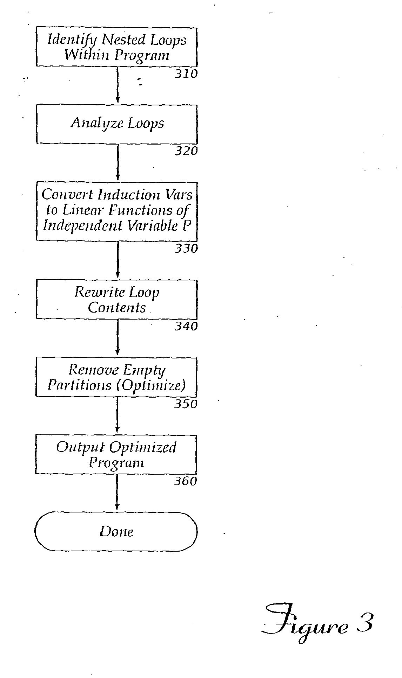

An embodiment of the invention can optimize code fragment 240 according to the flow chart of Figure 3. First, a plurality of nested loops within the program are identified (310) and analyzed (320). Such nested loops often occur where the program is to process data in a multi-dimensional away. In this example, nested loops 243 and 246 iterate over rows and columns of arrays A and B with induction variables $i$ and $j$. Next, the induction variables of the plurality of loops are converted into linear functions of an independent induction variable $P$ (320). For statements S1 and S2, linear functions of the following general form are assumed:

$$P = \mathrm{a}i + \mathrm{b}j + \mathrm{c} \qquad (\text{Statement S1})$$

$$P = \mathrm{d}i + \mathrm{e}j + \mathrm{f} \qquad (\text{Statement S2})$$

Since S1 and S2 access the same data during different iterations of the loops, they are treated together. Or, more precisely, because of the following dependencies:

$$S1[i,j] \, \delta^{\mathrm{f}} \, S2[i,j{+}1]$$

$$S2[i,j] \; \delta^f \; S1[i+1,j]$$

the statements are placed in the same affine partition:

$$ai \;+\; bj \;+\; c \;=\; P \;=\; di \;+\; e(j+1) \;+\; f$$

$$a(i+1) \;+\; bj \;+\; c \;=\; P \;=\; di \;+\; ej \;+\; f$$

Rearranging these equations, one can obtain

$$(a-d)i + (b-e)j = f + e - c$$

$$(a-d)i + (b-e)j = f - c - a$$

or

$$a = d;\; b = e;\; f + e = c$$

$$a = d;\; b = e;\; f - c = a$$

Without loss of generality, c may be set equal to zero, giving the following solution for a - f:

$$(a, b, c, d, e, f) = (1, -1, 0, 1, -1, 1)$$

The resulting affine transformations for S1 and S2 are:

$$P = i - j \qquad\qquad \text{(Statement S1)}$$

$$P = i - j + 1 \qquad\qquad \text{(Statement S2)}$$

Finally, the functional content of the plurality of nested loops in program fragment 240 may be rewritten (330) as shown below, where the nested loops are placed within a new loop of the independent induction variable and the statements are separated into partitions according to a system of inequalities derived from the linear functions.

```
For P = 1-n to n-1 DO
   For i = 1 to n DO
      For j = 1 to n DO
         If(P==i-j)
            A[i,i-P] - A[i,i-P] + B[i-1,i-P]
         If(P==i-j+1)
            B[i,i-P-+-1]= A[i,i-P]*B[i,i-P+1]
```

```
            DONE
        DONE
    DONE
    For P = 1-n TO n-1 DO
        For i = 1 TO n DO
            If 1 <= i - P <= n
                A [i,i-P] = A[i,i-P]+B[i-1,i-P]
            If 1 <=i-P+ 1 <=n
                B [i,i-P+1] = A[i,i-P]*B[i,i-P+1]
        DONE
    DONE
    For P = 1-n TO n-1 DO
        If P >=
            B[i,i-P+1] = A[i,i-P]* B[i,i-P+1]
        For i = MAX(1,P+ 1) to MIN(n,P+n-1) DO
            A [i,i-P] = A[i,i-P]+ B[i-1,i-P]
            B [i,i-P+1] = A[i,i-P]*B[i,i-P+l]
        DONE
        IF P<=0
            A[i,i-P]=A[i,i-P] + B[i-1,i-P]
    DONE
```

Although the new formulation appears to be much more complex than the original fragment, traditional dead-code removal and similar optimization techniques can often prune many branches (remove empty partitions) of this general-fom solution (340). Furthermore, because of the affine partitioning method by which the outer loop and conditional expressions were created, each iteration of the outer loop (and full execution of the two inner loops) has a smaller memory footprint than the full execution of the two loops of the original fragment. There are fewer data dependencies between iterations of the outer loop, and those iterations are independent in a way that permits them to be executed in parallel. Thus, the method has exposed parallelism inherent in the original program. A compiler implementing an embodiment of the invention might emit code to start many threads, each to execute (in parallel) one iteration of the outer loop. The resulting program could perform the same operations on the two arrays much faster because of its improved memory access patterns and its ability to take advantage of multiple processors in a system.

The computations to be performed for each of the partitions are placed in the consequents of the conditional expressions, the predicates of which are the inequalities comparing the independent induction variable and the induction variables of the original plurality of loops.

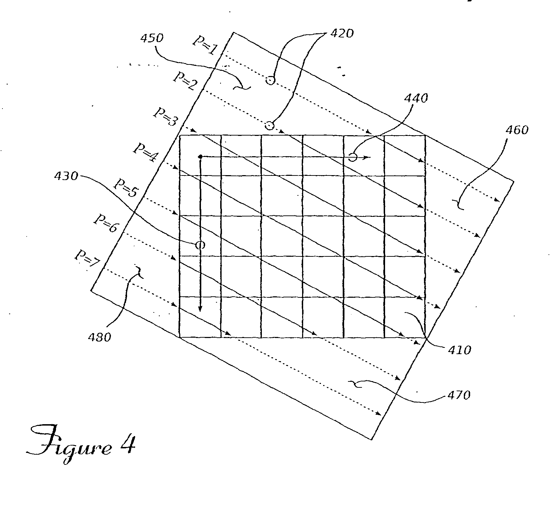

Figure 4 shows another way of thinking about program optimization by affine partitioning. The conversion and solution of linear equations finds generally parallel paths of data access 420 through an array 410. These parallel paths are not aligned with either of the two primary axes of the array (the rows 430 and columns 440). Therefore, certain areas 450, 460, 470 and 480 must be omitted from the processing of the outer independent loop. The system of inequalities describes the boundaries of the array polygon (in this case, simply a rectangle; in higher dimensions, a polyhedron) within the larger space of the independent induction variable.

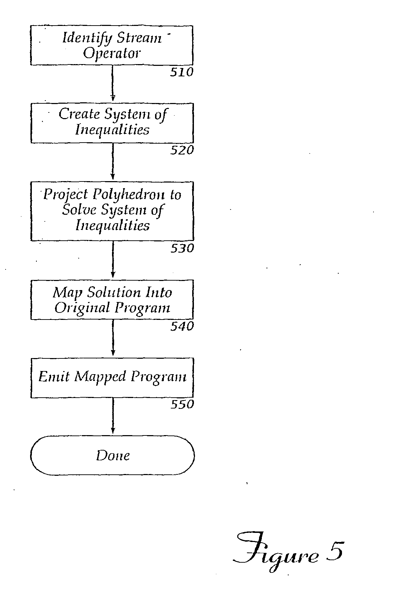

The foregoing description has focused on a simple, two-dimensional example case. However, the method is applicable to arbitrarily large dimensions, although arrays of such dimensions are difficult to depict in comprehensible figures. Computer languages such as Brook and StreamIt provide ready abstractions for dealing with large and variably-dimensioned streams of data. Streaming operators inherently contain a plurality of nested loops so that the program can operate over the streaming data, but the semantics of the language prevent some programming constructs that, in non-streaming languages such as C and C++, can thwart certain optimizations or render them unsafe. Embodiments of the invention can be usefully applied to optimize streaming programs according to the flowchart of Figure 5.

First, a stream operator is identified within an original computer program (510), then a system of inequalities that can be thought of as describing a multi-dimensional polyhedron is created for the operator (520). The polyhedron is projected onto a space of one fewer dimension to obtain a solution to the system of inequalities (530), and finally the solution is mapped back into the original program to create an optimized version of the program (540). As noted previously, the optimized program will probably appear to be much more complex than the original, but it will in fact have a smaller memory footprint (if such a footprint is possible) and fewer data dependencies than the original program.

In the optimized program emitted by a compiler implementing an embodiment of the invention, stream operators' associated nested iterative structures will be placed within an outermost loop of an independent induction variable. The functional contents of the loops will be separated into partitions by conditional statements comparing the independent induction variable with the induction variables of the inner loops, and the program will maintain the logical function of the original program, if not its precise order of operations.

Table 1 lists Brook operators and their associated Inequalities. Similar systems of inequalities can be prepared for the operators and paradigms of other computer languages.

**Table 1**

| BROOK STREAM OPERATORS | | |
|---|---|---|
| **Stream Operator** | **Streams, Arrays** | **System of Inequalities** |
| **streamRead**(dst, src, offset, len) | $src\,[i]$ <br> $dst\!<\!j\!>$ | $0 \leq j < len$ <br> $j+offset=i$ |
| **streamWrite** (src, dst, offset, len) | $src\!<\!i\!>$, <br> $dst\,[j]$ | $offset \leq j < offset+len$ <br> $j\text{-}offset=i$ |
| **streainReadAll**(dst, src) | $src\,[i_1,i_2]$, <br> $dst\!<\!j_1,j_2\!>$ | $j_1=i_1.$ <br> $j_2=i_2$ |
| **streamWriteAll** (src, dst) | $src\!<\!i_1,i_2\!>$, <br> $dst[j_1,j_2]$ | $j_1=i_{1.}$ <br> $j_2=i_2$ |
| **streamDomain**(dst, src, 2, $start_1$, $end_1$, $start_2$, $end_2$) | $src\!<\!i_1,i_2\!>$, <br> $dSt\!<\!j_1,j_2\!>$ | $0 \leq j_1 \leq end_1\text{-}start_1$ <br> $0 \leq j_2 \leq end_2\text{-}start_2$ <br> $i_1=j_1+start_1$ <br> $i_2=j_2+start_2$ |
| **streamGroup**(dst, src, 2, $b_1$, $b_2$) | $_{src}\!<\!i_1, i_2\!>$, <br> $dst\!<\!j_1, j_2, j_3, j_4\!>$ | $j_1 = i_1/b_1$ <br> $j_2 = i_2/b_2$ <br> $j_3 = i_1 \% b_1$ <br> $j_4 = i_2 \% b_2$ |
| **streamFlatten**(dst, src) | $src\!<\!j_1,j_2\!>$, <br> $dst\!<\!k\!>$ | $j_1 *dim_2 + j_2 = k$ |
| **streamStencil**(dst, src, 1, -$Offset_1$, $Offset_2$) | $src\!<\!i\!>$, <br> $dsi\!<\!j_1,j_2\!>$ | $0 < j_1 < dim_1$ <br> $0 \leq j2 < offset_1+offset_2+1$ <br> $i = j_1 + j_2\text{-}\,offset_1$ |
| **streamStride**(dst, src, 2, $do_1$, $no_1$, $do_2$, $no_2$) | $src\!<\!i_1,i_2\!>$, <br> $dst\,<\!j_1,j_2\!>$ | $0 \leq j_1 \leq (dim_1+do_1+no_1\text{-}1)/(do_1+no_1)*do_1$ <br> $0 \leq j_2 \leq (dim_2+do_2+no_2\text{-}1)/(do_2+no_2)*do_2$ <br> $i_1/\,(do_1\text{-}no_1) = j_1\,/do_1$ <br> $i_1 \% (do_1+no_1) = j_1 \% do_1$ <br> $i_2/(do_2+no_2) = j_2/do_2$ <br> $i_2 \% (do_2+no_2) = j_2 \% do_2$ |
| **streamRepeat**(dst, src, 2, $repeat_1$, $repeat_2$) | $src\!<\!i_1,i_2\!>$, <br> $dst\!<\!j_1,j_2\!>$ | $0 \leq j_1 \leq dim_1* repeat_1$ <br> $0 \leq j_1 \leq dim_2* repeat_2$ <br> $i=j_1 \% dim_1$ <br> $i_2 =j_2 \% dim_2$ |
| **streamReplicate**(dst, src, 2, $replica_1$, $replica_2$) | $src\!<\!i_1,i_2\!>$, <br> $dst\,<\!J_1,J_2\!>$ | $0 \leq j_i \leq dim_1 * replica_1$ <br> $0 \leq j_2 \leq dim_2 * replica_2$ <br> $i_1 =j_1 /replica_1$ <br> $i_2 = j_2/replica_2$ |
| **streamCat**(dst, src, orig) | $src\!<\!i\!>$, <br> $orig\,<\!j\!>$, <br> $dst\!<\!k\!>$ | $0 \leq k < dim_1 + dim\_orig_1$ <br> $k = (k < dim_1)\,?\;i : dim_1+j$ |
| **streamMerge**(dst, src, orig, $src\!<\!i\!>$, 1, offset) | $src\!<\!i\!>$, <br> $orig\!<\!i\!>$, <br> $dst\!<\!k\!>$ | $0 \leq offset < dim_1$ <br> $0 \leq k < max(offset + dim\_orig_1,dim_1)$ <br> $k = (offset \leq k < offset + dim\_orig_1$ <br> $? \; offset+j : i$ |

(continued)

| BROOK STREAM OPERATORS | | |
| --- | --- | --- |
| **Stream Operator** | **Streams, Arrays** | **System of Inequalities** |
| **streamGroupEx**(dst, src, 1, $src<i>$ -offset$_1$, offset$_2$) | $src<i>,$ $dst<j_1,j_2>$ | $j_1 = (i+offset_1)/ (offset_1 +offset_2)$ $j_2 = (i+offset_1) \% (offset_1 + offset_2)$ |
| **streamStencilExt**(dst, src, 1, -offset$_1$, offset$_2$) | $src<i_1>,$ $dst<j_1,j_2>$ | $0 \le j_1 < dim_1, 0 \le j_2 < offset_1+offset_2+1$ $i_1 =j_1+j_2\text{-}offset_1$ |

An optimizing compiler that implements an embodiment of the invention may read an original computer program from a file on a mass storage device, or may receive the output of a pre-processing stage through a pipe or other interprocess communication facility. Some compilers may construct a hierarchical data structure from a program source file or other input, and operate on the data structure itself. A compiler may emit output by writing the optimized program to a file, sending the program through a pipe or interprocess communication mechanism, or creating a new or modified intermediate representation such as a data structure containing the optimizations. The output may be human-readable program text in another language like C, C++ or assembly language, to be compiled or assembled by a second compiler; or may be machine code that can be executed directly or linked to other compiled modules or libraries.

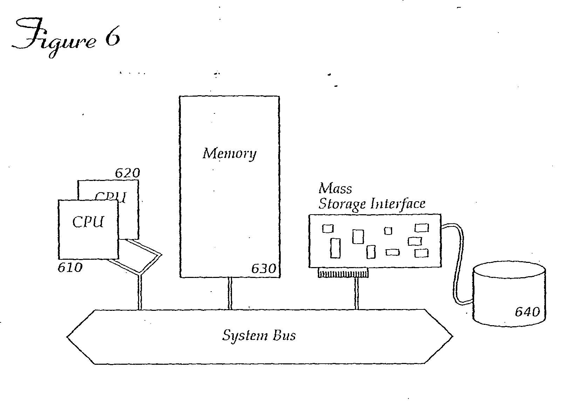

Figure 6 shows a computer system that could support a compiler implementing an embodiment of the invention. The system contains one or more processors 610, 620; memory 630; and a mass storage device 640. Processors 610 and 620 may contain multiple execution cores that share certain other internal structures such as address and data buses, caches, and related support circuitry. Multi-core CPUs may be logically equivalent to physically separate CPUs, but may offer cost or power savings. A compiler hosted by the system shown in this figure could produce executable files targeted to the system itself, or executables for a second, different system. If multiple CPUs (or multiple cores in a single physical CPU) are available, the executables may take advantage of them by executing the independent iterations of outer loops simultaneously on different CPUs. Optimized programs produced by the compiler may run faster than un-optimized versions of the same programs, and may make better use of available processors and cache facilities. Even if the system only has a single processor, the improved cache utilization may permit an optimized program to execute faster than an un-optimized program.

An embodiment of the invention may be a machine-readable medium having stored thereon instructions which cause a processor to perform operations as described above. In other embodiments, the operations might be performed by specific hardware components that contain hardwired logic. Those operations might alternatively be performed by any combination of programmed computer components and custom hardware components.

A machine-readable medium may include any mechanism for storing or transmitting information in a form readable by a machine (*e.g.*, a computer), including but not limited to Compact Disc Read-Only Memory (CD-ROMs), Read-Only Memory (ROMs), Random Access Memory (RAM), Erasable Programmable Read-Only Memory (EPROM), and a transmission over the Internet.

The applications of the present invention have been described largely by reference to specific examples and in terms of particular allocations of functionality to certain hardware and/or software components. However, those of skill in the art will recognize that program optimization for parallel execution can also be performed by software and hardware that distribute the functions of embodiments of this invention differently than herein described. Such variations and implementations are understood to be apprehended according to the following claims.

This disclosure includes all the subject matter recited in the following clauses:

1. A method of operating a computer system, the steps performed by the system comprising:

identifying (310) a plurality of nested loops (243,266) within a first computer program, the plurality of nested loops to have a functional content accessing contents of a memory (630), each of the plurality of loops iterated with a respective induction variable;
analyzing (320) the functional content to determine the boundaries of the memory to be accessed by the functional content; and
converting (330) the induction variables of each of the nested loops into linear functions of an independent induction variable; and
outputting (360) a second computer program containing a the functional content of the plurality of nested loops within a new loop of the independent induction variable;
wherein the functional content of the plurality of nested loops is contained in the second computer program as partitions of the new loop separated according to a system of inequalities derived from the linear functions, the system of inequalities to describe the boundaries of the memory accessed by the functional content.

2. The method of clause 1 wherein a plurality of iterations of the new loop are to be performed in parallel.

3. The method of clause 1 wherein the partitions are consequents of a plurality of conditional expressions, each conditional expression involving the independent induction variable and at least one of the plurality of induction variables.

4. The method of clause 1, further comprising: optimizing the second computer program to remove empty partitions.

5. The method of clause 1 wherein the first computer program is a program in one of Brook computer language and Streamlt computer language.

6. The method of clause 1 wherein the second computer program is a program in one of C and C++ computer language.

7. A machine-readable medium containing instructions that, when executed by a data processing machine, cause the machine to perform operations comprising:

reading a first computer program (240);
identifying in the first program a first plurality of nested loops (243,266) to process data in an array stored in memory, each of the plurality of loops iterated with a respective induction variable;
analyzing (320) the first plurality of nested loops to determine the boundaries of the memory to be processed; and
producing a second computer program to perform a function of the first computer program, wherein
the second computer program contains a second plurality of nested loops to process data in the array;
the functional content of the first plurality of nested loops is contained in the second computer program as partitions of the new loop separated according to a system of inequalities; and
the system of inequalities describe the boundaries of the memory to be processed.

8. The machine-readable medium of clause 7 wherein a program statement in the first plurality of nested loops appears within a conditional statement in the new loops, the conditional statement to compare an induction variable of the outer loop with an induction variable of an inner loop.

9. The machine-readable medium of clause 7 wherein the first program is to process data in a multi-dimensional array.

10. The machine-readable medium of clause 7 wherein analyzing the first plurality of nested loops comprises:

representing a first array access as a first linear equation;
representing a second array access as a second linear equation; and
locating a simultaneous solution to the first and second linear equations.

11. The machine-readable medium of clause 10 wherein iterations of the outer loop correspond to the simultaneous solution to the first and second linear equations.

12. A system comprising:

a plurality of processors (610,620);
a memory (630); and
a data storage device (640); wherein
the data storage device contains instructions to cause the processors to
load a first computer program (240) into the memory;
identify in the first a first plurality of nested loops (243,266) to process data within an array; and
produce a second computer program to perform a function of the first program, and further wherein
the second computer program contains a second plurality of nested loops to process data within the array; and
program statements within the second plurality of nested loops are separated into partitions according to a system of inequalities describing the boundaries of the memory to be processed.

13. The system of clause 12 wherein the plurality of processors comprise a plurality of execution cores of a single physical processor.

14. The system of clause 12 wherein the plurality of processors comprise a plurality of physical processors, each physical processor to contain at least one execution core.

## Claims

1. A method comprising:

   identifying a first stream operator within a computer program, the first stream operator to access a memory via a plurality of nested loops;
   converting the plurality of nested loops into a plurality of linear equations of an independent induction variable, the plurality of linear equations to describe a multi-dimensional polyhedron;
   projecting the multi-dimensional polyhedron onto a space one dimension smaller than a dimension of the multi-dimensional polyhedron;
   determining system of inequalities to describe the space one dimension smaller than the dimension of the multi-dimensional polyhedron;
   mapping the system of inequalities to at least a second stream operator; and
   modifying the original computer program to include the at least second stream operator.

2. The method of claim 1 wherein the modified computer program has a smaller memory footprint than the original computer program.

3. The method of claim 1 wherein the modified computer program has fewer data dependencies than the original computer program.

4. The method of claim 1, further comprising:

   optimizing the modified computer program to remove empty partitions.

5. The method of claim 1 wherein the first stream operator is expressed in one of Brook computer language and StreamIt computer language.

6. An apparatus comprising:

   means for identifying a first stream operator within a computer program, the first stream operator to access a memory via a plurality of nested loops;
   means for converting the plurality of nested loops into a plurality of linear equations of an independent induction variable, the plurality of linear equations to describe a multi-dimensional polyhedron;
   means for projecting the multi-dimensional polyhedron onto a space one dimension smaller than a dimension of the multi-dimensional polyhedron;
   means for determining a system of inequalities to describe the space one dimension smaller than the dimension of the multi-dimensional polyhedron;
   means for mapping the system of inequalities to at least a second stream operator; and
   means for modifying the original computer program to include the at least second stream operator.

7. The apparatus of claim 6, wherein the modified computer program has a smaller memory footprint than the original computer program.

8. The apparatus of claim 6, wherein the modified computer program has fewer data dependencies than the original computer program.

9. The apparatus of claim 6, further comprising:

   means for optimizing the modified computer program to remove empty partitions.

10. The apparatus of claim 6, wherein the first stream operator is expressed in one of Brook computer language and StreamIt computer language.

11. A system comprising:

a plurality of processing cores;
a memory to include a computer program; and
a compiler to
identify a first stream operator within the computer program, the first stream operator to access a memory via a plurality of nested loops,
convert the plurality of nested loops into a plurality of linear equations of an independent induction variable, the plurality of linear equations to describe a multi-dimensional polyhedron,
project the multi-dimensional polyhedron onto a space one dimension smaller than a dimension of the multi-dimensional polyhedron,
determine a system of inequalities to describe the space one dimension smaller than the dimension of the multi-dimensional polyhedron,
map the system of inequalities to at least a second stream operator, and
modify the original computer program to include the at least second stream operator,
wherein the modified program is to be executed via at least one of the plurality of processing cores.

12. The system of claim 11, wherein the modified computer program has a smaller memory footprint than the original computer program.

13. The system of claim 11, wherein the modified computer program has fewer data dependencies than the original computer program.

14. The system of claim 11, the compiler to further optimize the modified computer program to remove empty partitions.

15. The system of claim 11, wherein the first stream operator is expressed in one of Brook computer language and StreamIt computer language.

*Figure 1*

Figure 2

```
For I = 1 to Rows
    For J = 1 to Columns
250 ──→ A[I,J] = A[I,J] + B[I-1,J]
260 ──→ B[I,J] = B[I,J] * A[I,J-1]
```

Identify Nested Loops
Within Program
310

↓

Analyze Loops
320

↓

Convert Induction Vars
to Linear Functions of
Independent Variable P
330

↓

Rewrite Loop
Contents
340

↓

Remove Empty
Partitions (Optimize)
350

↓

Output Optimized
Program
360

↓

( Done )

*Figure 3*

Figure 4

```
┌─────────────────────┐
│   Identify Stream   │
│      Operator       │
└─────────────────────┘
                  510
           │
           ▼
┌─────────────────────┐
│   Create System of  │
│     Inequalities    │
└─────────────────────┘
                  520
           │
           ▼
┌─────────────────────┐
│ Project Polyhedron to│
│   Solve System of   │
│     Inequalities    │
└─────────────────────┘
                  530
           │
           ▼
┌─────────────────────┐
│  Map Solution Into  │
│   Original Program  │
└─────────────────────┘
                  540
           │
           ▼
┌─────────────────────┐
│  Emit Mapped Program│
└─────────────────────┘
                  550
           │
           ▼
      ╭──────────────╮
      │     Done     │
      ╰──────────────╯
```

*Figure 5*

*Figure 6*

CPU
620

CPU

CPU
610

Memory

630

Mass
Storage Interface

System Bus

640

Europäisches
Patentamt

European
Patent Office

Office européen
des brevets

# EUROPEAN SEARCH REPORT

Application Number

EP 11 00 1883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MONICA.S.LAM & MICHAEL E.WOLF: "A data locality optimizing algorithm", ACM, [Online] vol. 39, no. 4, 1 April 2004 (2004-04-01), pages 442-459, XP002416387, New York ISSN: 0362-1340 Retrieved from the Internet: URL:http://delivery.acm.org/10.1145/990000 /989437/p442-wolf.pdf?key1=989437&key2=585 2659611&coll=portal&dl=ACM&CFID=1250278&CF TOKEN=93017092> [retrieved on 2007-01-23] * the whole document * * paragraph [04.3] * * paragraph [04.4] * ----- | 1-15 | INV. G06F9/45 |
| X | HUA LIN ET AL: "A new approach for finding loop transformation matrices", PARALLEL AND DISTRIBUTED SYSTEMS, 1994. INTERNATIONAL CONFERENCE ON HSINCHU, TAIWAN 19-21 DEC. 1994, LOS ALAMITOS, CA, USA,IEEE COMPUT. SOC, 19 December 1994 (1994-12-19), pages 386-391, XP010223556, ISBN: 0-8186-6555-6 * the whole document * * abstract * * page 386, left-hand column, line 16 - page 387, left-hand column, line 48 * * paragraph [0004] * ----- -/-- | 1-15 | TECHNICAL FIELDS SEARCHED (IPC) G06F |

The present search report has been drawn up for all claims

| Place of search | Date of completion of the search | Examiner |
|---|---|---|
| The Hague | 6 June 2011 | Dieben, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 345 961 A1**

Europäisches Patentamt

European Patent Office

Office européen des brevets

# EUROPEAN SEARCH REPORT

Application Number

EP 11 00 1883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WOLF M E ET AL: "A data locality optimizing algorithm", ACM SIGPLAN NOTICES, ACM, ASSOCIATION FOR COMPUTING MACHINERY, NEW YORK, NY, US, vol. 26, no. 6, June 1991 (1991-06), pages 30-44, XP002406665, ISSN: 0362-1340 * the whole document * | 1-15 | |
| X | LAM M S ET AL: "The cache performance and optimizations of blocked algorithms", ASPLOS. PROCEEDINGS. INTERNATIONAL CONFERENCE ON ARCHITECTURAL SUPPORT FOR PROGRAMMING LANGUAGES AND OPERATING SYSTEMS, NEW YORK, NY, US, vol. 26, no. 4, 8 April 1991 (1991-04-08), pages 63-74, XP002277032, * paragraph [01.1] * | 1-15 | |
| X | FABIEN QUILLERE, SANJAY RAJOPADHYE, DORAN WILDE: "Generation of Efficient Nested Loops from Polyhedra", INTERNATIONAL JOURNAL OF PARALLEL PROGRAMMING, [Online] vol. 28, no. 5, 11 September 2000 (2000-09-11), pages 469-498, XP002416388, Retrieved from the Internet: URL:citeseer.ist.psu.edu/quillere00generat ion.html> [retrieved on 2007-01-24] * abstract * * the whole document * * paragraph [03.2] * | 1-15 | **TECHNICAL FIELDS SEARCHED (IPC)** |

-/--

The present search report has been drawn up for all claims

| Place of search | Date of completion of the search | Examiner |
|---|---|---|
| The Hague | 6 June 2011 | Dieben, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

Application Number

EP 11 00 1883

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDERSON J M ET AL: "DATA AND COMPUTATION TRANSFORMATIONS FOR MULTIPROCESSORS", ACM SIGPLAN NOTICES, ACM, ASSOCIATION FOR COMPUTING MACHINERY, NEW YORK, NY, US, vol. 30, no. 8, 1 August 1995 (1995-08-01) , pages 166-178, XP000528326, ISSN: 0362-1340 * the whole document * * page 167, right-hand column, lines 7-21 * * page 166, right-hand column, lines 21-33 * * page 166, left-hand column, line 16 - right-hand column, line 8 * ----- | 1-15 | |
| A | WO 2004/017207 A2 (HEWLETT PACKARD DEVELOPMENT CO [US]) 26 February 2004 (2004-02-26) * paragraph [0049] * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 6 June 2011 | Dieben, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 1883

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2011

| Patent document cited in search report | | Publication date | Patent family member(s) | | Publication date |
|---|---|---|---|---|---|
| WO 2004017207 | A2 | 26-02-2004 | AU | 2003263893 A1 | 03-03-2004 |
| | | | EP | 1573549 A2 | 14-09-2005 |
| | | | JP | 2006516056 T | 15-06-2006 |
| | | | US | 2004034754 A1 | 19-02-2004 |

EPO FORM P0459

For more details about this annex : see Official Journal of the European Patent Office, No. 12/82